# EUROPÄISCHE PATENTSCHRIFT

(11) **EP 4 193 070 B1**
(45) Veröffentlichungstag und Bekanntmachung des Hinweises auf die Patenterteilung: **24.04.2024**
(21) Anmeldenummer: 21755409.6
(22) Anmeldetag: 02.08.2021
(51) Int. Cl.: B05B 3/10, F16C 17/02, F16C 17/04, B05B 5/04, F16C 17/10

(54) **LAGERUNGSSYSTEM FÜR EINEN ROTATIONSZERSTÄUBER**
BEARING SYSTEM FOR A ROTARY ATOMIZING DEVICE
SYSTÈME DE PALIER POUR UN PULVÉRISATEUR ROTATIF

(30) Priorität: 04.08.2020 DE 102020120536
(43) Veröffentlichungstag der Anmeldung: 14.06.2023
(73) Patentinhaber: Dürr Systems AG, 74321 Bietigheim-Bissingen (DE)
(72) Erfinder: HESS, Arved, 78464 Konstanz (DE); KLEINHANS, Tobias, 71726 Benningen (DE)
(74) Vertreter: v. Bezold & Partner Patentanwälte - PartG mbB
(86) Internationale Anmeldenummer: PCT/EP2021/071526
(87) Internationale Veröffentlichungsnummer: WO 2022/029056

(56) Entgegenhaltungen:
- EP-A1- 3 001 048
- CN-A- 103 591 127
- DE-U1-202018 105 842
- JP-A- H06 117 432
- US-A1- 2003 169 951
- US-A1- 2004 008 913

## Beschreibung

Die Erfindung betrifft ein Lagerungssystem für eine Antriebsturbine eines Rotationszerstäubers.

In modernen Lackieranlagen zur Lackierung von Kraftfahrzeugkarosseriebauteilen wird als Applikationsgerät üblicherweise ein Rotationszerstäuber eingesetzt. Dabei rotiert ein sogenannter Glockenteller mit hoher Drehzahl und schleudert den zu applizierenden Lack von einer Absprühkante des Glockentellers ab. Der Antrieb des Glockentellers erfolgt hierbei durch eine Druckluftturbine mit einer drehbar gelagerten Turbinenwelle, die an ihrem Ende den Glockenteller trägt. Zur Lagerung der Turbinenwelle dienen hierbei üblicherweise aerostatische Luftlager.

Ein Nachteil der Verwendung von aerostatischen Luftlagern zur Lagerung der Turbinenwelle besteht darin, dass Druckluft mit einem hohen Reinheitsgrad erforderlich ist, d.h. mit einem geringen Ölgehalt und einer geringen Zahl und Größe von Festkörperpartikeln.

Ein weiterer Nachteil der bekannten Luftlager besteht in der Empfindlichkeit gegenüber einer schlagartigen Krafteinwirkung.

Ferner verfügen die bekannten Luftlager auch nur bedingt über Notlaufeigenschaften.

Zum technischen Hintergrund der Erfindung ist auch hinzuweisen auf US 9,970,481 B1, DE 20 2018 105 842 U1, JP H06 117432 A, US 2004/008913 A1, EP 3 001 048 A1, CN 103 591 127 A1 und die Wikipedia-Artikel "Spiral groove bearing" und "Foil bearing".

Schließlich offenbart US 2003/0169951 A1 einen Rotationszerstäuber mit einem Lagerungssystem gemäß dem Oberbegriff von Anspruch 1. Dieses bekannte Lagerungssystem ist jedoch noch nicht vollständig befriedigend.

Der Erfindung liegt deshalb die Aufgabe zugrunde, ein verbessertes Lagerungssystem zur Lagerung einer Turbinenwelle in einem Rotationszerstäuber zu schaffen.

Diese Aufgabe wird durch ein erfindungsgemäßes Lagerungssystem gemäß dem Hauptanspruch gelöst.

Das erfindungsgemäße Lagerungssystem weist zunächst in Übereinstimmung mit dem Stand der Technik eine drehbare Turbinenwelle auf, die zur Aufnahme eines Glockentellers dient, wobei der Glockenteller beispielsweise auf das Ende der Turbinenwelle aufgeschraubt werden kann, wie es an sich aus dem Stand der Technik bekannt ist.

Darüber hinaus weist auch das erfindungsgemäße Lagerungssystem in Übereinstimmung mit dem Stand der Technik mindestens ein Radiallager auf, um die Turbinenwelle drehbar zu lagern.

Die Erfindung zeichnet sich nun dadurch aus, dass das Radiallager mindestens ein Folienlager aufweist. Derartige Folienlager sind an sich aus dem Stand der Technik bekannt. Beispielsweise ist auf den Wikipedia-Artikel "Foil bearing" hinzuweisen. Die Besonderheit liegt im großen Arbeitsbereich bzgl. Drehzahlen und einem niedrigen zur Verfügung stehenden Anfahrmoment der Zerstäuberturbine.

Zusätzlich besteht auch die Möglichkeit, dass das Radiallager mindestens ein Spiralrillenlager aufweist, wobei derartige Lager auch als Spiralnutenlager bezeichnet werden.

In einem bevorzugten Ausführungsbeispiel der Erfindung weist das Folienlager zunächst eine Deckfolie auf, die im Wesentlichen zylindrisch bzw. freiformgeformt ist und die Turbinenwelle umgibt.

Darüber hinaus weist das Folienlager vorzugsweise eine Federfolie auf, die im Wesentlichen zylindrisch geformt ist und die Deckfolie mindestens teilweise umgibt, wobei die Federfolie eine radial nach innen gerichtete Federkraft auf die Deckfolie ausübt.

Beispielsweise kann die Federfolie eine Flächensteifigkeit von im Wesentlichen 10⁹ N/m³ aufweisen, wobei Abweichungen von ±50 %, ±25 %, ±10 % oder ±5 % möglich sind.

Weiterhin verfügt das Folienlager vorzugsweise über eine Lagerschale, die die Federfolie außen ummantelt, wobei sich die Federfolie außen an der Lagerschale abstützt und radial nach innen auf die Deckfolie drückt. Die Lagerschale kann beispielsweise zylindrisch geformt sein oder mehrere Kreisbögen aufweisen.

Beispielsweise kann die Federfolie als Drahtgitter, als Wellenfolie mit abstehenden Beulen, als Metallfolie mit gebogenen Strukturen oder als Elastomerfolie ausgebildet sein, um nur einige Beispiele zu nennen.

Weiterhin ist zu erwähnen, dass die Federfolie ätztechnisch hergestellt sein kann, wobei auch andere Herstellungsarten möglich sind.

Ferner ist zu erwähnen, dass die Deckfolie mit einer verschleißmindernden Beschichtung auf der Seite der Turbinenwelle (d.h. innen) beschichtet sein kann, um die Reibung und den Verschleiß im Betrieb zu verringern.

Darüber hinaus ist zu erwähnen, dass die Lagerschale und die Deckfolie über den Umfang verteilt verschiedene Radien aufweisen kann, wie es beispielsweise auch von hydrodynamischen Lagern bekannt ist.

Der mechanische Antrieb der Turbinenwelle erfolgt erfindungsgemäß mittels einer Druckluftturbine mit einem drehbaren Turbinenrad. Hierzu weist die Druckluftturbine eine Antriebsluftzuführung auf, um Antriebsluft zum Antrieb des Turbinenrads zuzuführen. Darüber hinaus hat die Druckluftturbine eine Abluftführung, um die expandierte Antriebsluft von der Druckluftturbine abzuführen, wie es an sich aus dem Stand der Technik bekannt ist.

Die zugeführte Antriebsluft und/oder Abluft wird erfindungsgemäß teilweise auch durch das Folienlager geleitet werden, beispielsweise radial von außen nach innen. Hierzu kann die Antriebsluftzuführung einen Teil der Antriebsluft abzweigen und durch das Folienlager leiten.

Darüber hinaus kann auch die expandierte Antriebsluft von der Abluftführung durch das Folienlager geleitet werden, beispielsweise in axialer Richtung.

Die Federfolie, die Deckfolie und/oder die Lagerschale können deshalb radial durchgehende Löcher aufweisen, um die abgezweigte Antriebsluft radial von außen nach innen Durchleiten zu können.

In dem bevorzugten Ausführungsbeispiel der Erfindung weist das Radiallager nicht nur ein einziges Folienlager auf, sondern mindestens zwei Folienlager, die in Axialrichtung aneinander angrenzen oder voneinander beabstandet sind, wobei sich zwischen den benachbarten Folienlagern beispielsweise ein Abstandsring befinden kann.

Beispielsweise können die beiden Folienlager auch auf verschiedenen Seiten des Turbinenrads der Druckluftturbine angeordnet sein. In einer anderen Erfindungsvariante liegen die beiden Folienlager dagegen auf derselben Seite des Turbinenrads der Druckluftturbine.

Die vorstehende Beschreibung bezieht sich im Wesentlichen auf die Gestaltung des Radiallagers als Folienlager. Darüber hinaus weist das erfindungsgemäße Lagerungssystem vorzugsweise ein zusätzliches Axiallager auf, um die Turbinenwelle auch in axialer Richtung zu lagern. Dieses Axiallager ist vorzugsweise als aerodynamisches Spiralrillenlager ausgebildet, wobei derartige Spiralrillenlager an sich aus dem Stand der Technik bekannt sind. Beispielsweise ist auf den Wikipedia-Artikel "Spiral groove bearing" hinzuweisen.

So umfasst das Spiralrillenlager vorzugsweise zunächst eine Rotationsscheibe, die drehstarr mit der Turbinenwelle verbunden ist und im Betrieb mit der Turbinenwelle rotiert. Darüber hinaus weist das Spiralrillenlager eine erste Standscheibe auf, die in dem Lagerungssystem ortsfest angeordnet ist, wobei die Rotationsscheibe und die erste Standscheibe im Wesentlichen planparallel aneinander angrenzen. In der Stirnfläche der ersten Standscheibe befinden sich dann vorzugsweise spiralförmige Rillen, wie es an sich von herkömmlichen Spiralrillenlager bekannt ist.

In dem bevorzugten Ausführungsbeispiel der Erfindung umfasst das Spiralrillenlager zusätzlich eine zweite Standscheibe, die in dem Lagerungssystem ortsfest angeordnet ist, wobei die Rotationsscheibe und die zweite Standscheibe im Wesentlichen planparallel aneinander angrenzen. Auch in der Stirnfläche der zweiten Standscheibe sind auf der Seite der Rotationsscheibe oder Standscheibe mehrere Spiralrillen angeordnet, wie es von herkömmlichen Spiralrillenlagern bekannt ist und deshalb nicht näher beschrieben werden muss.

Die beiden Standscheiben werden vorzugsweise durch mindestens eine Feder in axialer Richtung gegeneinander vorgespannt, d.h. zusammengedrückt.

Zwischen den beiden Standscheiben befindet sich vorzugsweise ein Abstandshalter (z.B. Abstandsbolzens), wobei der Abstandshalter den axialen Abstand zwischen den beiden Standscheiben einstellt, um die Anlaufreibung zu reduzieren.

Die vorstehend erwähnte Rotationsscheibe des Spiralrillenlagers kann beispielsweise durch das Turbinenrad gebildet werden oder drehstarr mit dem Turbinenrad verbunden sein. In dem bevorzugten Ausführungsbeispiel der Erfindung ist beiderseits des Turbinenrads jeweils ein Spiralrillenlager angeordnet. Dadurch wirkt das Axiallager auch als Dichtung und reduziert die Leckageverluste der Turbine.

In einer Erfindungsvariante weist die Lagerschale des Folienlagers einen Innenquerschnitt auf, der in axialer Richtung im Wesentlichen konstant ist, während die Deckfolie des Folienlagers einen Innenquerschnitt aufweist, der sich in Umfangsrichtung verjüngt und somit mehrere Keile bildet. Dies kann sowohl durch die Lagerschale als auch durch die Form der Federfolie ausgeformt werden.

In einer anderen Erfindungsvariante weisen dagegen die Lagerschale und die Deckfolie des Folienlagers beide jeweils einen Innenquerschnitt auf, der sich in axialer Richtung zu dem Glockenteller hin verjüngt, insbesondere in konischer Form.

Allgemein ist zu erwähnen, dass das erfindungsgemäße Lagerungssystem vorzugsweise im Betrieb durch Reibungswärme eine Heizleistung erzeugt, die mindestens 50 W, 100 W, 200 W oder 300 W beträgt, um Kondensationen in dem Lagerungssystem zu vermeiden.

Ferner ist zu erwähnen, dass die Federfolie des Folienlagers einen bestimmten radialen Federweg erlaubt, während die Federfolie einen bestimmten Lagerdurchmesser aufweist, wobei das Verhältnis zwischen dem Federweg und dem Lagerdurchmesser vorzugsweise kleiner ist als 0,1, 0,05, 0,01, 0,005 oder 0,0033.

Weiterhin ist zu bemerken, dass das Lagerungssystem zur Abdichtung der drehbaren Turbinenwelle eine Labyrinthdichtung aufweisen kann, die die Turbinenwelle vorzugsweise ringförmig umgibt und am distalen Ende der Turbinenwelle angeordnet ist, d.h. vor der Befestigungsmöglichkeit für den Glockenteller.

Schließlich ist zu erwähnen, dass die Erfindung nicht nur Schutz beansprucht für das vorstehend beschriebene Lagerungssystem. Vielmehr beansprucht die Erfindung auch Schutz für einen kompletten Rotationszerstäuber mit einem solchen Lagerungssystem zur Lagerung der Turbinenwelle.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.
Figur 1 zeigt eine schematische Querschnittsansicht durch einen erfindungsgemäßen Rotationszerstäuber.
Figur 2 zeigt eine Stirnansicht der Standscheibe des Spiralrillenlagers des Rotationszerstäubers aus Figur 1.
Figur 3A zeigt eine schematische Querschnittsansicht eines anderen Ausführungsbeispiels eines erfindungsgemäßen Rotationszerstäubers.
Figur 3B zeigt eine vergrößerte Detailansicht aus Figur 3A.
Figur 4A zeigt eine Abwandlung des Ausführungsbeispiels gemäß Figur 3A.
Figur 4B zeigt eine vergrößerte Detailansicht aus Figur 4A.
Figur 5 zeigt eine vereinfachte schematische Querschnittsdarstellung eines erfindungsgemäßen Folienlagers.
Figur 6 zeigt eine Abwandlung des Folienlagers aus Figur 6.
Figur 7 zeigt eine schematische Querschnittsansicht eines Spiralrillenlagers zur Verwendung als Axiallager.
Figuren 8-10 zeigen verschiedene Abwandlungen des Ausführungsbeispiels gemäß Figur 1.

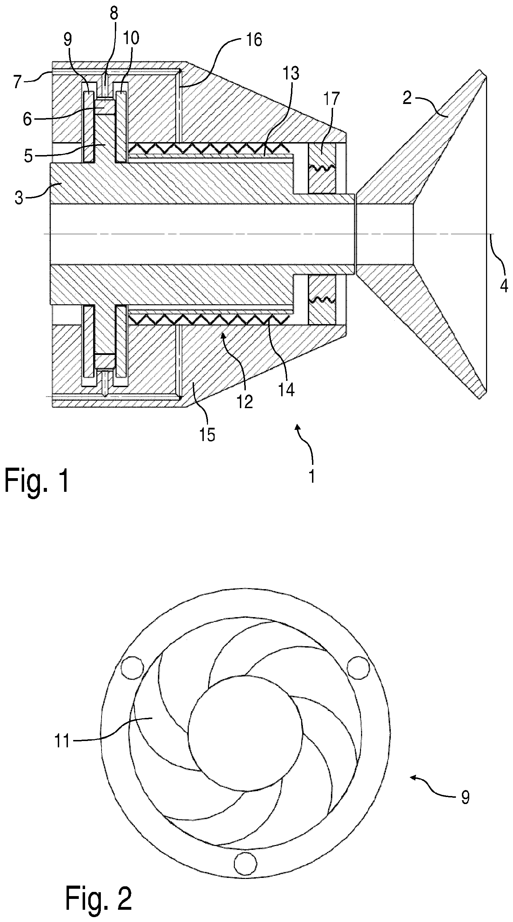

Figur 1 zeigt eine vereinfachte, schematisierte Darstellung eines erfindungsgemäßen Rotationszerstäubers 1, der beispielsweise verwendet werden kann, um in einer Lackieranlage zur Lackierung von Kraftfahrzeugkarosserien den zu applizierenden Lack abzugeben. Hierzu weist der Rotationszerstäuber 1 einen Glockenteller 2 auf, der auf einer Turbinenwelle 3 montiert ist und im Lackierbetrieb mit hoher Drehzahl um eine Rotationsachse 4 rotiert.

Zum Antrieb des Rotationszerstäubers 1 dient in herkömmlicher Weise eine Druckluftturbine mit einem Turbinenrad 5, das in radialer Richtung von derTurbinenwelle 3 absteht und an seinem Ende Turbinenschaufeln 6 trägt. Im Betrieb wird das Turbinenrad 5 mit den Turbinenschaufeln 6 von Antriebsluft angeströmt, die von einer Luftzuführung 7 zugeführt wird. In dem Rotationszerstäuber 1 zweigt von der Luftzuführung 7 eine Antriebsluftleitung 8 ab, die auf die Turbinenschaufeln 6 gerichtet ist.

In axialer Richtung ist das Turbinenrad 5 von zwei ortfesten Standscheiben 9, 10 benachbart, die planparallel an den Stirnflächen des Turbinenrads 5 anliegen und zusammen mit dem Turbinenrad 5 ein Spiralrillenlager zur axialen Lagerung der Turbinenwelle 3 bilden. Hierzu weisen die beiden Standscheiben 9, 10 auf der dem Turbinenrad 5 zugewandten Seite jeweils Spiralrillen 11 auf, wie in Figur 2 anhand der Standscheibe 9 dargestellt ist. Die beiden Standscheiben 9, 10 bilden also zusammen mit dem Turbinenrad 5 ein Axiallager innerhalb des Rotationszerstäubers 1.

Darüber hinaus enthält der Rotationszerstäuber 1 auch ein Radiallager zur Lagerung der Turbinenwelle 3. Das Radiallager ist hierbei als Folienlager 12 ausgebildet und umfasst eine Deckfolie 13, eine Federfolie 14 und eine Lagerschale 15, wobei die Lagerschale 15 durch das Zerstäubergehäuse gebildet wird. Die Federfolie 14 ist hierbei zwischen der Lagerschale 15 und der Deckfolie 13 angebracht. Dabei stützt sich die Federfolie 14 außen an der Lagerschale 15 ab und drückt die Deckfolie 13 nach innen. Das Folienlager 12 ist in seinem Aufbau und seiner Funktionsweise grundsätzlich aus dem Stand der Technik bekannt und muss deshalb nicht näher beschrieben werden.

Vorteilhaft an der neuartigen Verwendung des Folienlagers 12 in dem Rotationszerstäuber 1 ist unter anderem die geringere Empfindlichkeit gegenüber schlagartigen Krafteinwirkungen.

Hierbei ist zu erwähnen, dass von der Luftzuführung 7 eine Lagerluftleitung 16 abzweigt, um einen Teil der Antriebsluft in das Folienlager 12 einzuleiten und zwar radial von außen nach innen.

Darüber hinaus ist zu erwähnen, dass der Rotationszerstäuber 1 am distalen Ende der Turbinenwelle, aber innerhalb des Rotationszerstäubers 1 eine Labyrinthdichtung 17 aufweist.

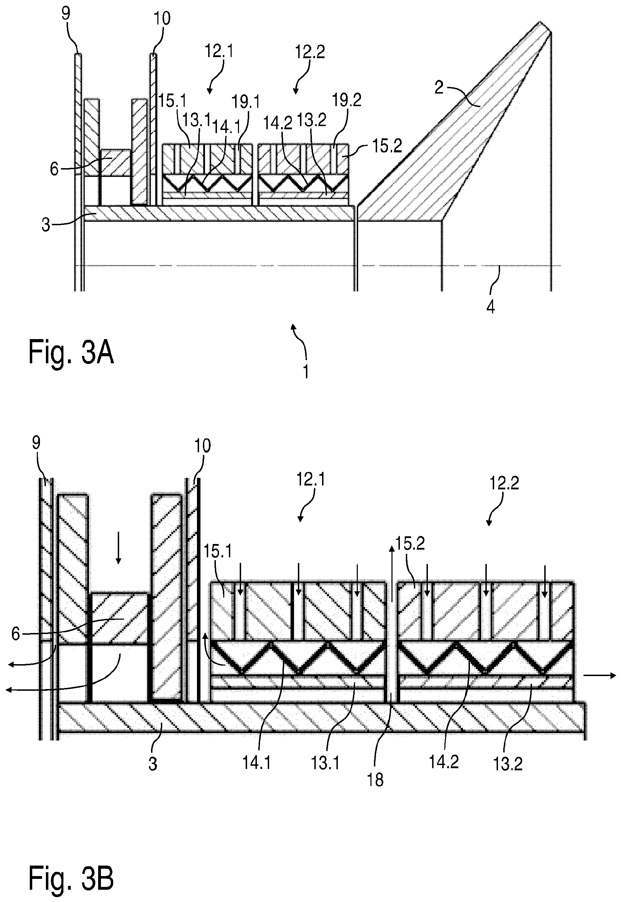

Die Figuren 3A und 3B zeigen Querschnittsansichten durch ein anderes Ausführungsbeispiel eines erfindungsgemäßen Rotationszerstäubers 1, wobei dieses Ausführungsbeispiel weitgehend mit dem vorstehend beschriebenen und in den Figuren 1 und 2 dargestellten Ausführungsbeispiel übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass zwei Folienlager 12.1, 12.2 vorgesehen sind, um die Turbinenwelle 3 zu lagern. Die beiden Folienlager 12.1, 12.2 sind hierbei in axialer Richtung nebeneinander angeordnet und schließen lediglich einen Luftspalt 18 zwischen sich ein, wobei die Funktion des Luftspalts 18 noch detailliert beschrieben wird.

Die beiden Folienlager 12.1, 12.2 weisen jeweils eine Lagerschale 15.1, 15.2 auf, wobei die beiden Lagerschalen 15.1, 15.2 jeweils radial verlaufende Durchgangsbohrungen 19.1, 19.2 aufweisen, um die über die Lagerluftleitung 16 zugeführte Lagerluft in radialer Richtung durch die Lagerschale 15.1, 15.2 durchführen zu können, wie durch die Pfeile dargestellt ist. Die zugeführte Lagerluft kann dann durch den Luftspalt 18 wieder entweichen, wie ebenfalls durch den Pfeil dargestellt ist.

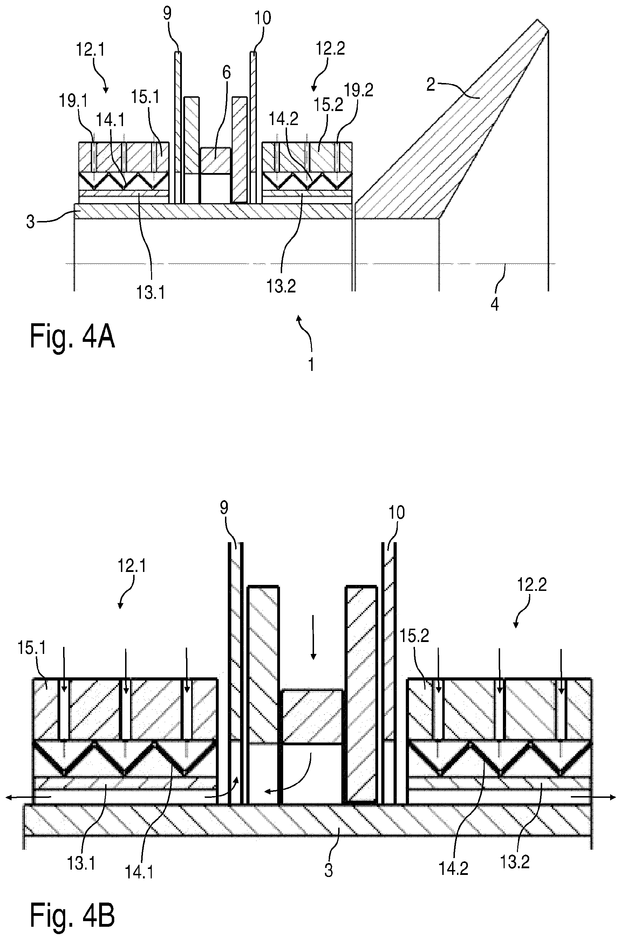

Die Figuren 4A und 4B zeigen eine Abwandlung des Ausführungsbeispiels gemäß den Figuren 3A und 3B, so dass zur Vermeidung von Wiederholungen auf die vorstehende Beschreibung zu den Figuren 3A und 3B verwiesen wird. Eine Besonderheit dieses Ausführungsbeispiels besteht darin, dass die beiden Folienlager 12.1, 12.2 auf verschiedenen Seiten des Turbinenrads 5 angeordnet sind.

Weiterhin ist aus Figur 4B ersichtlich, dass ein Teil der expandierten Abluft der Druckluftturbine durch die Folienlager 12.1, 12.2 geleitet werden kann.

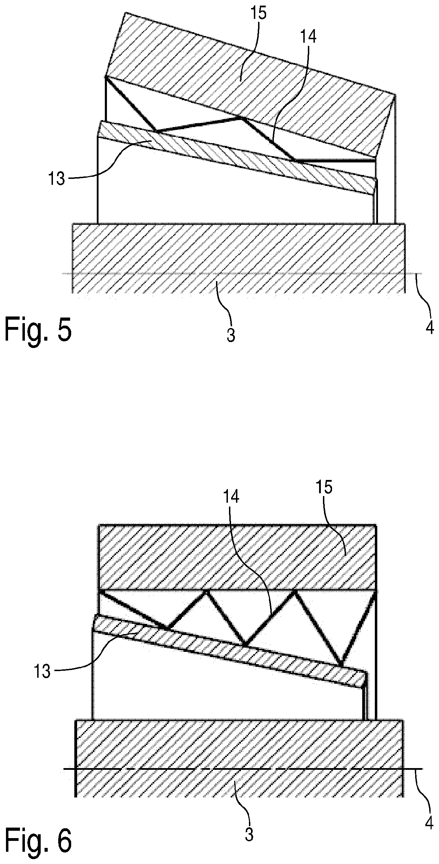

Figur 5 zeigt eine vereinfachte, schematische Querschnittsansicht eines erfindungsgemäßen Folienlagers 12, das weitgehend mit den vorstehend beschriebenen Ausführungsbeispielen von Folienlagern 12 übereinstimmt, so dass zur Vermeidung von Wiederholungen auf die vorstehende Beschreibung verwiesen wird, wobei für entsprechende Einzelheiten dieselben Bezugszeichen verwendet werden.

Bei dem Ausführungsbeispiel gemäß Figur 5 weisen die Lagerschale 15 und die Deckfolie 13 jeweils einen Innenquerschnitt auf, der sich in axialer Richtung zu dem Glockenteller 2 hin konisch verjüngt.

Bei dem Ausführungsbeispiel gemäß Figur 6 weist die Lagerschale 15 dagegen einen Innenquerschnitt auf, der in axialer Richtung im Wesentlichen konstant ist. Allerdings hat hier die Deckfolie 13 hierbei einen Innenquerschnitt, der sich in axialer Richtung zu dem Glockenteller 2 hin konisch verjüngt.

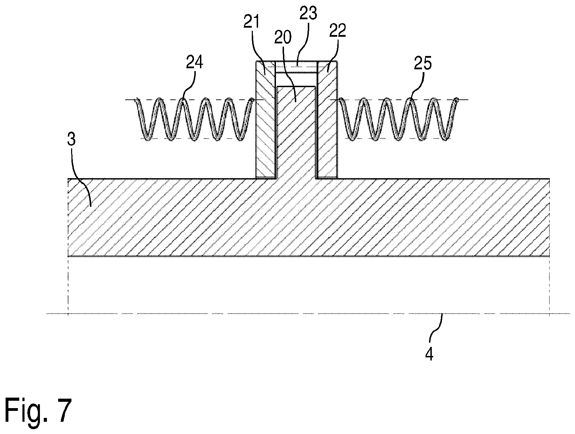

Schließlich zeigt Figur 7 ein weiteres Ausführungsbeispiel eines erfindungsgemäßen Spiralrillenlagers für die Turbinenwelle 3, wobei dieses Ausführungsbeispiel teilweise mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten dieselben Bezugszeichen verwendet werden.

Das Spiralrillenlager umfasst hierbei eine Rotationsscheibe 20, die radial von der Turbinenwelle 3 absteht und mit der Turbinenwelle 3 rotiert.

Beiderseits der Rotationsscheibe 20 sind zwei planparallele Standscheiben 21, 22 angeordnet, die planparallel an den Stirnflächen der Rotationsscheibe 20 anliegen und jeweils eine Spiralrille enthalten, wie es von herkömmlichen Spiralrillenlager an sich bekannt ist.

Der axiale Abstand zwischen den beiden Standscheiben 21, 22 wird hierbei durch einen Abstandsbolzen 23 eingestellt, um die Anlaufreibung zu verringern.

Hierbei ist zu erwähnen, dass die beiden Standscheiben 21, 22 durch zwei Federn 24, 25 vorgespannt werden, d.h. die beiden Federn 24, 25 drücken die beiden Standscheiben 21, 22 gegen die Rotationsscheibe 20.

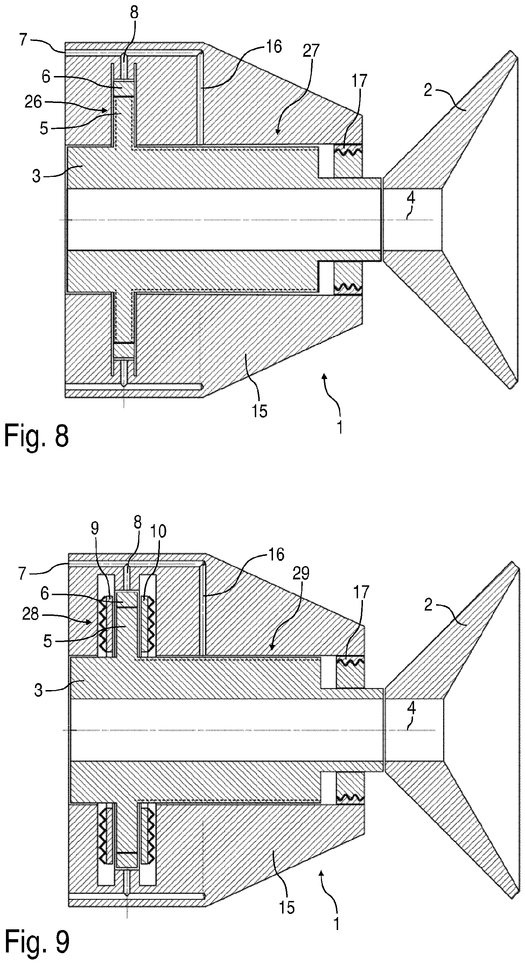

Die Figuren 8-10 zeigen verschiedene Abwandlungen des Ausführungsbeispiels gemäß Figur 1, so dass zur Vermeidung von Wiederholungen auf die vorstehende Beschreibung verwiesen wird, wobei für entsprechende Einzelheiten dieselben Bezugszeichen verwendet werden.

Bei der nicht erfindungsgemäßen Abwandlung gemäß Figur 8 besteht eine Besonderheit darin, dass als Axiallager ein Spiralnutenlager 26 dient, während ein Radiallager durch ein weiteres Spiralnutenlager 27 gebildet wird.

Bei der nicht erfindungsgemäßen Abwandlung gemäß Figur 9 besteht eine Besonderheit darin, dass als Axiallager ein Folienlager 28 dient, während ein Radiallager durch ein Spiralnutenlager 29 gebildet wird.

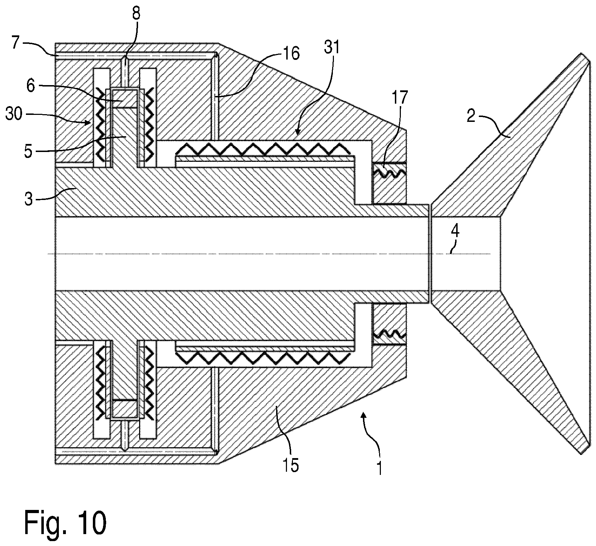

Bei der Abwandlung gemäß Figur 10 besteht eine Besonderheit darin, dass als Axiallager ein Folienlager 30 dient, während ein Radiallager ebenfalls durch ein Folienlager 31 gebildet wird.

### Bezugszeichenliste

- 1: Rotationszerstäuber
- 2: Glockenteller
- 3: Turbinenwelle
- 4: Rotationsachse des Glockentellers
- 5: Turbinenrad und Rotationsscheibe des Spiralrillenlagers
- 6: Turbinenschaufeln
- 7: Luftzuführung für Antriebsluft und Lagerluft
- 8: Antriebsluftleitung
- 9, 10: Standscheiben des Spiralrillenlagers
- 11: Spiralrillen auf der Standscheibe des Spiralrillenlagers
- 12, 12.1, 12.2: Folienlager zur Lagerung der Turbinenwelle
- 13, 13.1, 13.2: Deckfolie
- 14, 14.1, 14.2: Federfolie
- 15, 15.1, 15.2: Lagerschale
- 16: Lagerluftleitung
- 17: Labyrinthdichtung
- 18: Luftspalt zwischen den beiden Folienlagern
- 19.1, 19.2: Bohrungen in der Lagerschale zur Zuführung der Lagerluft
- 20: Rotationsscheibe des Spiralrillenlagers
- 21, 22: Standscheiben des Spiralrillenlagers
- 23: Abstandsbolzen zwischen den Standscheiben des Spiralrillenlagers
- 24, 25: Federn zum axialen Vorspannen der Standscheiben des Spiralrillenlagers
- 26: Spiralnutenlager als Axiallager
- 27: Spiralnutenlager als Radiallager
- 28: Folienlager als Axiallager
- 29: Spiralnutenlager als Radiallager
- 30: Folienlager als Axiallager
- 31: Folienlager als Radiallager

## Patentansprüche

1. Lagerungssystem für eine Antriebsturbine eines Rotationszerstäubers (1) zur Applikation eines Lacks, mit
a) einer drehbaren Turbinenwelle (3) zur Aufnahme eines Glockentellers (2), der zum Absprühen des Lacks dient, und
b) einem Radiallager zur drehbaren Lagerung der Turbinenwelle (3), wobei das Radiallager mindestens ein Folienlager (12, 12.1, 12.2) aufweist,
c) einer Druckluftturbine mit einem drehbaren Turbinenrad (5) zum Antrieb der Turbinenwelle (3),
d) einer Antriebsluftzuführung (7, 8) zur Zuführung von Antriebsluft zum Antrieb des Turbinenrads (5), und
e) einer Abluftführung zum Abführen der expandierten Antriebsluft von der Druckluftturbine,
**dadurch gekennzeichnet,**
f) dass die Antriebsluftzuführung der Druckluftturbine einen Teil der Antriebsluft abzweigt und durch das Folienlager (12, 12.1, 12.2) leitet, und/oder
g) die Abluftführung der Druckluftturbine die expandierte Antriebsluft mindestens teilweise durch das Folienlager (12, 12.1, 12.2) leitet.

2. Lagerungssystem nach Anspruch 1, **dadurch gekennzeichnet, dass** das Folienlager (12, 12.1, 12.2) folgendes aufweist:
a) eine Deckfolie (13, 13.1, 13.2), die im Wesentlichen zylindrisch geformt ist und die Turbinenwelle (3) umgibt,
b) eine Federfolie (14, 14.1, 14.2), die im Wesentlichen zylindrisch geformt ist und die Deckfolie (13, 13.1, 13.2) mindestens teilweise umgibt, wobei die Federfolie (14, 14.1, 14.2) eine radial nach innen gerichtete Federkraft auf die Deckfolie (13, 13.1, 13.2) ausübt und vorzugsweise eine Flächensteifigkeit von im Wesentlichen 1·10⁹N/m³ ±50%, ±25%, ±10% oder ±5%, aufweist, und
c) eine Lagerschale (15, 15.1, 15.2), die die Federfolie (14, 14.1, 14.2) außen ummantelt, wobei die Lagerschale (15, 15.1, 15.2) optional zylindrisch geformt ist oder optional mehrere Kreisbögen aufweist.

3. Lagerungssystem nach Anspruch 2, **dadurch gekennzeichnet,**
a) **dass** die Federfolie (14, 14.1, 14.2) wie folgt ausgebildet ist:
a1) als Drahtgitter,
a2) als Beulenfolie mit abstehenden Beulen in der Federfolie (14, 14.1, 14.2),
a3) als Metallfolie mit gebogenen Strukturen, oder
a4) als Elastomerfolie und
b) **dass** die Federfolie (14, 14.1, 14.2) ätztechnisch hergestellt ist, und
c) **dass** die Deckfolie (13, 13.1, 13.2) mit einer verschleißmindernden Beschichtung beschichtet ist.

4. Lagerungssystem nach Anspruch 2 oder 3, **dadurch gekennzeichnet, dass** die Deckfolie (13, 13.1, 13.2) über den Umfang verteilt zwei verschiedene Radien aufweist.

5. Lagerungssystem nach einem der vorhergehenden Ansprüche 2-4, **dadurch gekennzeichnet,**
**dass** die Federfolie (14, 14.1, 14.2) und die Deckfolie (13, 13.1, 13.2) und die Lagerschale (15, 15.1, 15.2) radial durchgehende Löcher aufweisen, um die abgezweigte Antriebsluft radial von außen nach innen durchzuleiten.

6. Lagerungssystem nach einem der vorhergehenden Ansprüche, **dadurch gekennzeichnet,**
a) **dass** das Radiallager axial hintereinander mindestens zwei Folienlager (12, 12.1, 12.2) aufweist, insbesondere mit einem Abstandsring zwischen den benachbarten Folienlagern (12, 12.1, 12.2),
b) **dass** die beiden Folienlager (12,12.1,12.2) auf verschiedenen Seiten oder auf derselben Seite des Turbinenrads (5) der Druckluftturbine angeordnet sind.

7. Lagerungssystem nach einem der vorhergehenden Ansprüche, **gekennzeichnet durch** mindestens ein zusätzliches Axiallager zur Lagerung der Turbinenwelle (3), wobei das Axiallager vorzugsweise mindestens ein Spiralrillenlager oder anderes Lager aufweist, insbesondere ein Rayleigh-Step-Bearing.

8. Lagerungssystem nach Anspruch 7, **dadurch gekennzeichnet,**
a) **dass** das Axiallager ein Spiralrillenlager (9-11) aufweist, während das Radiallager ein Folienlager (12) aufweist, oder
b) **dass** das Axiallager ein Folienlager (30) aufweist, während das Radiallager ein Folienlager (31) aufweist.

9. Lagerungssystem nach Anspruch 7 oder 8, **dadurch gekennzeichnet, dass** das Axiallager folgendes aufweist:
a) eine Rotationsscheibe (5, 20), die drehstarr mit der Turbinenwelle (3) verbunden ist und im Betrieb mit der Turbinenwelle (3) rotiert, und
b) eine erste Standscheibe (9, 21), die in dem Lagerungssystem ortsfest angeordnet ist, wobei die Rotationsscheibe (5, 20) und die erste Standscheibe (9, 21) im Wesentlichen planparallel aneinander angrenzen.

10. Lagerungssystem nach Anspruch 8 oder 9, **dadurch gekennzeichnet,**
a) **dass** das Axiallager eine zweite Standscheibe (10, 22) aufweist, die in dem Lagerungssystem ortsfest angeordnet ist, wobei die Rotationsscheibe (5, 20) und die zweite Standscheibe (10, 22) im Wesentlichen planparallel aneinander angrenzen,
b) **dass** die beiden Standscheiben (21, 22) vorzugsweise durch mindestens ein federndes Element (24, 25) in axialer Richtung gegeneinander vorgespannt werden,
c) **dass** zwischen den beiden Standschreiben (21, 22) vorzugsweise ein Abstandshalter (23) angeordnet, insbesondere in Form eines Abstandsbolzens (23), wobei der Abstandshalter (23) den axialen Abstand zwischen den beiden Standscheiben (21, 22) einstellt, um die Anlaufreibung zu reduzieren.

11. Lagerungssystem nach Anspruch einem der Ansprüche 8 bis 10, **dadurch gekennzeichnet,**
a) **dass** die Rotationsscheibe (5, 20) des Axiallagers vorzugsweise drehstarr mit dem Turbinenrad (5) der Druckluftturbine verbunden oder durch das Turbinenrad (5) gebildet wird, insbesondere mit Spiralen auf der Statorseite, und
b) **dass** vorzugsweise in axialer Richtung beiderseits des Turbinenrads (5) jeweils ein Spiralrillenlager angeordnet ist.

12. Lagerungssystem nach einem der Ansprüche 2 bis 11, **dadurch gekennzeichnet,**
a) **dass** die Lagerschale (15, 15.1, 15.2) einen Innenquerschnitt aufweist, der in axialer Richtung im Wesentlichen konstant ist, während die Deckfolie (13, 13.1, 13.2) einen Innenquerschnitt aufweist, der sich in Umfangsrichtung oder in axialer Richtung zu dem Glockenteller (2) hin verjüngt, insbesondere konisch, oder
b) **dass** die Lagerschale (15, 15.1, 15.2) und die Deckfolie (13, 13.1, 13.2) jeweils einen Innenquerschnitt aufweisen, der sich verjüngt, insbesondere in axialer Richtung zu dem Glockenteller (2) hin, insbesondere konisch.

13. Lagerungssystem nach einem der Ansprüche 2 bis 12, **dadurch gekennzeichnet,**
a) **dass** das Lagerungssystem im Betrieb bei Volllast mit einer Heizleistung von mindestens 50W, 100W, 200W oder 300W Reibungswärme erzeugt, um Kondensationen in dem Lagerungssystem zu vermeiden, und
b) **dass** die Federfolie (14, 14.1, 14.2) einen bestimmten radialen Federweg erlaubt, während die Federfolie (14, 14.1, 14.2) einen bestimmten Lagerdurchmesser aufweist, wobei das Verhältnis aus dem Federweg und dem Lagerdurchmesser kleiner ist als 0,1, 0,05, 0,01, 0,005 oder 0,0033.

14. Lagerungssystem nach einem der vorhergehenden Ansprüche, **dadurch gekennzeichnet,**
a) **dass** das Lagerungssystem zur Abdichtung der Turbinenwelle (3) eine Labyrinthdichtung (17) aufweist,
b) **dass** die Labyrinthdichtung (17) die Turbinenwelle (3) vorzugsweise ringförmig umgibt,
c) **dass** die Labyrinthdichtung optional eine ringförmige oder spiralnutenförmige Struktur aufweist.

15. Rotationszerstäuber (1) mit einem Lagerungssystem nach einem der vorhergehenden Ansprüche.

## Claims

1. Bearing system for a drive turbine of a rotary atomizer (1) for the application of a paint, with a) a rotatable turbine shaft (3) for receiving a bell cup (2) which is used for spraying off the paint, and
b) a radial bearing for rotatably supporting the turbine shaft (3), wherein the radial bearing comprises at least one foil bearing (12, 12.1, 12.2) ,
c) a compressed air turbine with a rotatable turbine wheel (5) for driving the turbine shaft (3),
d) a drive air supply (7, 8) for supplying drive air for driving the turbine wheel (5), and
e) an exhaust air guide for discharging the expanded drive air from the compressed air turbine,
**characterized in**
f) that the drive air supply of the compressed air turbine branches off a part of the drive air and conducts it through the foil bearing (12, 12.1, 12.2), and/or
g) the exhaust air guide of the compressed air turbine guides the expanded drive air at least partially through the foil bearing (12, 12.1, 12.2).

2. Bearing system according to claim 1, **characterized in that** the foil bearing (12, 12.1, 12.2) comprises the following:
a) a cover foil (13, 13.1, 13.2) which is substantially cylindrically shaped and surrounds the turbine shaft (3),
b) a spring foil (14, 14.1, 14.2) which is substantially cylindrically shaped and at least partially surrounds the cover foil (13, 13.1, 13.2), wherein the spring foil (14, 14.1, 14.2) exerts a radially inwardly directed spring force on the cover foil (13, 13.1, 13.2) and preferably has a surface stiffness of substantially 1·10⁹N/m³ ±50%, ±25%, ±10% or ±5%, and
c) a bearing shell (15, 15.1, 15.2) externally encasing the spring foil (14, 14.1, 14.2), wherein the bearing shell (15, 15.1, 15.2) is optionally cylindrically shaped or optionally has several circular arcs.

3. Bearing system according to claim 2, **characterized in,**
a) **that** the spring foil (14, 14.1, 14.2) is formed as follows:
a1) as a wire mesh,
a2) as a bump foil with protruding bumps in the spring foil (14, 14.1, 14.2),
a3) as a metal foil with bent structures, or
a4) as an elastomer foil, and
b) **that** the spring foil (14, 14.1, 14.2) is produced by etching, and
c) **that** the cover foil (13, 13.1, 13.2) is coated with a wear-reducing coating.

4. Bearing system according to claim 2 or 3, **characterized in, that** the cover foil (13, 13.1, 13.2) has two different radii distributed over the circumference.

5. Bearing system according to one of the preceding claims 2-4, **characterized in that** the spring foil (14, 14.1, 14.2) and the cover foil (13, 13.1, 13.2) and the bearing shell (15, 15.1, 15.2) have radially through-going holes in order to guide the branched-off drive air radially from the outside to the inside.

6. Bearing system according to one of the preceding claims, **characterized in,**
a) **that** the radial bearing has at least two foil bearings (12, 12.1, 12.2) axially one behind the other, in particular with a spacer ring between the adjacent foil bearings (12, 12.1, 12.2),
b) **that** the two foil bearings (12, 12.1, 12.2) are arranged on different sides or on the same side of the turbine wheel (5) of the compressed air turbine.

7. Bearing system according to one of the preceding claims, **characterized by** at least one additional axial bearing for supporting the turbine shaft (3), the axial bearing preferably having at least one spiral groove bearing or other bearing, in particular a Rayleigh step bearing.

8. Bearing system according to claim 7, **characterized in,**
a) **that** the axial bearing comprises a spiral groove bearing (9-11), while the radial bearing comprises a foil bearing (12), or
b) **that** the axial bearing comprises a foil bearing (30) while the radial bearing comprises a foil bearing (31).

9. Bearing system according to claim 7 or 8, **characterized in that** the axial bearing comprises:
a) a rotating disc (5, 20) which is torsionally rigidly connected to the turbine shaft (3) and rotates with the turbine shaft (3) during operation, and
b) a first stationary disc (9, 21) which is arranged in a stationary manner in the bearing system, the rotating disc (5, 20) and the first stationary disc (9, 21) adjoining one another in a substantially plane-parallel manner,

10. Bearing system according to claim 8 or 9, **characterized in,**
a) **that** the axial bearing has a second stationary disc (10, 22) which is arranged in a fixed position in the bearing system, the rotating disc (5, 20) and the second stationary disc (10, 22) adjoining one another in an essentially plane-parallel manner,
b) **that** the two stationary discs (21, 22) are preferably prestressed against one another in the axial direction by at least one elastic element (24, 25),
c) **that** a spacer (23) is preferably arranged between the two stationary discs (21, 22), in particular in the form of a spacer bolt (23), the spacer (23) adjusting the axial distance between the two stationary discs (21, 22) in order to reduce the starting friction.

11. Bearing system according to any one of claims 8 to 10, **characterized in,**
a) **that** the rotational disc (5, 20) of the axial bearing is preferably connected in a rotationally rigid manner to the turbine wheel (5) of the compressed air turbine or is formed by the turbine wheel (5), in particular with spirals on the stator side, and
b) **that** a spiral axial bearing is preferably arranged in the axial direction on both sides of the turbine wheel (5).

12. Bearing system according to one of claims 2 to 11, **characterized in,**
a) **that** the bearing shell (15, 15.1, 15.2) has an inner cross-section which is essentially constant in the axial direction, while the cover film (13, 13.1, 13.2) has an inner cross-section which tapers in the circumferential direction or in the axial direction towards the bell cup (2), in particular conically, or
b) **that** the bearing shell (15, 15.1, 15.2) and the cover film (13, 13.1, 13.2) each have an inner cross section which tapers, in particular in the axial direction towards the bell cup (2), in particular conically.

13. Bearing system according to one of the preceding claims 2 to 12, **characterized in**
a) **that** the bearing system generates frictional heat during operation at full load with a heating power of at least 50W, 100W, 200W or 300W in order to avoid condensation in the bearing system, and
b) **that** the spring foil (14, 14.1, 14.2) allows a certain radial spring travel, while the spring foil (14, 14.1, 14.2) has a certain bearing diameter, wherein the ratio of the spring travel and the bearing diameter is smaller than 0.1, 0.05, 0.01, 0.005 or 0.0033.

14. Bearing system according to any of the preceding claims, **characterized in,**
a) **that** the bearing system has a labyrinth seal (17) for sealing the turbine shaft (3),
b) **that** the labyrinth seal (17) surrounds the turbine shaft (3), preferably in an annular manner,
c) **that** the labyrinth seal optionally has an annular or spiral groove-shaped structure.

15. Rotary atomizer (1) with a bearing system according to any of the preceding claims.

## Revendications

1. Système de palier pour une turbine d'entraînement d'un pulvérisateur rotatif (1) pour l'application d'une peinture, avec
a) un arbre de turbine rotatif (3) pour le logement d'un bol (2) qui permet la pulvérisation de la peinture et
b) un palier radial pour le logement rotatif de l'arbre de turbine (3), dans lequel le palier radial comprend au moins un palier à feuilles (12, 12.1, 12.2),
c) une turbine à air comprimé avec une roue de turbine rotative (5) pour l'entraînement de l'arbre de turbine (3),
d) une alimentation en air d'entraînement (7, 8) pour l'introduction de l'air d'entraînement pour l'entraînement de la roue de turbine (5) et
e) une évacuation d'air pour l'évacuation de l'air d'entraînement expansé par la turbine à air comprimé,
**caractérisé en ce que**
f) l'alimentation en air d'entraînement de la turbine à air comprimé dévie une partie de l'air d'entraînement et le guide à travers le palier à feuilles (12, 12.1, 12.2) et/ou
g) l'évacuation d'air de la turbine à air comprimé guide l'air d'entraînement expansé au moins partiellement à travers le palier à feuilles (12, 12.1, 12.2).

2. Système de palier selon la revendication 1, **caractérisé en ce que** le palier à feuilles (12, 12.1, 12.2) comprend ce qui suit :
a) une feuille de recouvrement (13, 13.1, 13.2) qui présente globalement une forme cylindrique et qui entoure l'arbre de turbine (3),
b) une feuille élastique (14, 14.1, 14.2) qui présente globalement une forme cylindrique et qui entoure au moins partiellement la feuille de recouvrement (13, 13.1, 13.2), dans lequel la feuille élastique (14, 14.1, 14.2) exerce une force élastique orientée radialement vers l'intérieur sur la feuille de recouvrement (13, 13.1, 13.2) et présente, de préférence, une rigidité de surface globalement égale à 1.10⁹ N/m³ ± 50 %, ± 25 %, ± 10 % ou ±5 % et
c) une coque de palier (15, 15.1, 15.2) qui enveloppe la feuille élastique (14, 14.1, 14.2) à l'extérieur, dans lequel la coque de palier (15, 15.1, 15.2) présente en option une forme cylindrique ou présente, en option, plusieurs arcs de cercle.

3. Système de palier selon la revendication 2, **caractérisé en ce que**
a) la feuille élastique (14, 14.1, 14.2) est conçue comme suit :
a1) comme une grille,
a2) comme une feuille à bosses avec des bosses en saillie dans la feuille élastique (14, 14.1, 14.2),
a3) comme une feuille métallique avec des structures incurvées ou
a4) comme une feuille en élastomère et
b) la feuille élastique (14, 14.1, 14.2) est fabriqué à l'aide d'une technique de gravure et
c) la feuille de recouvrement (13, 13.1, 13.2) est revêtue avec un revêtement réduisant l'usure.

4. Système de palier selon la revendication 2 ou 3, **caractérisé en ce que** la feuille de recouvrement (13, 13.1, 13.2) présente deux rayons différents répartis sur la circonférence.

5. Système de palier selon l'une des revendications précédentes 2 à 4, **caractérisé en ce que** la feuille élastique (14, 14.1, 14.2) et la feuille de recouvrement (13, 13.1, 13.2) et la coque de palier (15, 15.1, 15.2) présentent des trous traversant radialement afin de guider l'air d'entraînement dévié radialement de l'extérieur vers l'intérieur.

6. Système de palier selon l'une des revendications précédentes, **caractérisé en ce que**
a) le palier radial comprend au moins deux paliers à feuilles (12, 12.1, 12.2) disposés axialement l'un derrière l'autre, plus particulièrement avec une bague d'écartement entre les deux paliers à feuilles (12, 12.1, 12.2) adjacents,
b) les deux paliers à feuilles (12, 12.1, 12.2) sont disposés sur des côtés différents ou sur le même côté de la roue de turbine (5) de la turbine à air comprimé.

7. Système de palier selon l'une des revendications précédentes, **caractérisé par** au moins un palier axial supplémentaire pour le logement de l'arbre de turbine (3), dans lequel le palier axial comprend de préférence au moins un palier à rainures spiralées ou un autre palier, plus particulièrement un Rayleigh-Step-Bearing.

8. Système de palier selon la revendication 7, **caractérisé en ce que**
a) le palier axial comprend un palier à rainures spiralées (9 - 11), tandis que le palier radial comprend un palier à feuilles (12) ou
b) le palier axial comprend un palier à feuilles (30) tandis que le palier radial comprend un palier à feuilles (31).

9. Système de palier selon la revendication 7 ou 8, **caractérisé en ce que** le palier axial comprend ce qui suit :
a) un disque rotatif (5, 20) qui est relié de manière rigide en rotation avec l'arbre de turbine (3) et qui tourne, lors du fonctionnement, avec l'arbre de turbine (3) et
b) un premier disque vertical (9, 21) qui est disposé de manière fixe dans le système de palier, dans lequel le disque rotatif (5, 20) et le premier disque vertical (9, 21) sont adjacents de manière globalement parallèle entre eux.

10. Système de palier selon la revendication 8 ou 9, **caractérisé en ce que**
a) le palier axial comprend un deuxième disque vertical (10, 22) qui est disposé de manière fixe dans le système de palier, dans lequel le disque rotatif (5, 20) et le deuxième disque vertical (10, 22) sont adjacents de manière globalement parallèle entre eux,
b) les deux disques verticaux (21, 22) sont précontraints l'un contre l'autre dans la direction axiale de préférence à l'aide d'au moins un élément élastique (24, 25),
c) entre les deux disques verticaux (21, 22) est disposée de préférence une entretoise (23), plus particulièrement sous la forme d'une tige d'écartement (23), dans lequel l'entretoise (23) ajuste la distance axiale entre les deux disques verticaux (21, 22), afin de réduire la friction.

11. Système de palier selon l'une des revendications 8 à 10, **caractérisé en ce que**
a) le disque rotatif (5, 20) du palier axial est relié de préférence de manière rigide en rotation avec la roue de turbine (5) de la turbine à air comprimé ou est constitué de la roue de turbine (5), plus particulièrement avec des spirales sur le côté du rotor et
b) de préférence dans la direction axiale des deux côtés de la roue de turbine (5), est disposé respectivement un palier à rainures spiralées.

12. Système de palier selon l'une des revendications 2 à 11, **caractérisé en ce que**
a) la coque de palier (15, 15.1, 15.2) présente une section transversale interne qui est globalement constante dans la direction axiale, tandis que la feuille de recouvrement (13, 13.1, 13.2) présente une section transversale interne qui se rétrécit, plus particulièrement de manière conique, dans la direction de la circonférence ou dans la direction axiale en direction du bol (2), ou
b) la coque de palier (15, 15.1, 15.2) et la feuille de recouvrement (13, 13.1, 13.2) présentent chacune une section transversale interne qui se rétrécit, plus particulièrement de manière conique, plus particulièrement dans la direction axiale, en direction du bol (2).

13. Système de palier selon l'une des revendications 2 à 12, **caractérisé en ce que**
a) le système de logement génère, lors du fonctionnement à pleine charge, une puissance de chauffage d'au moins 50 W, 100 W, 200 W ou 300 W de chaleur de friction afin d'éviter les condensations dans le système de palier et
b) la feuille élastique (14, 14.1, 14.2) permet une course élastique radiale déterminée tandis que la feuille élastique (14, 14.1, 14.2) présente un diamètre de palier déterminé, dans lequel le rapport entre la course élastique et le diamètre du palier est inférieur à 0,1, 0,05, 0,01, 0,005 ou 0,0033.

14. Système de palier selon l'une des revendications précédentes, **caractérisé en ce que**
a) le système de palier comprend, pour l'étanchéification de l'arbre de turbine (3), un joint d'étanchéité à labyrinthe (17),
b) le joint d'étanchéité à labyrinthe (17) entoure l'arbre de turbine (3) de manière de préférence annulaire,
c) le joint d'étanchéité à labyrinthe présente en option une structure annulaire ou à rainures spiralées.

15. Pulvérisateur rotatif (1) avec un système de palier selon l'une des revendications précédentes.
